# DEMANDE DE BREVET EUROPEEN

(11) **EP 4 842 035 A1**
(43) Date de publication de la demande: **18.11.2026**
(21) Numéro de dépôt: 26175993.0
(22) Date de dépôt: 30.04.2026
(51) Int. Cl.: H04W 16/10, H04L 41/14, H04L 41/0806, H04L 43/08, H04L 43/091, H04W 24/02, H04L 41/0823

(54) **PROCÉDÉ DE CONFIGURATION RADIO D'UN ENSEMBLE DE N BULLES TACTIQUES DANS LE CADRE DE LEUR DÉPLOIEMENT SUR UNE ZONE D'INTERVENTION, PROGRAMME D' ORDINATEUR ET BLOC ÉLECTRONIQUE DE CONFIGURATION CORRESPONDANTS**

(30) Priorité: 16.05.2025 FR 2505212
(71) Demandeur: THALES, 92190 Meudon (FR)
(72) Inventeur: JIA, David, 92622 GENNEVILLIERS CEDEX (FR); KHUC, Doan, 92622 GENNEVILLIERS CEDEX (FR); CAPDEVIELLE, Véronique, 92622 GENNEVILLIERS CEDEX (FR); ADRIAN, Cyril, 92622 GENNEVILLIERS CEDEX (FR); SCHOLLER, Franck, 92622 GENNEVILLIERS CEDEX (FR); DECONINK, Augustin, 92230 GENNEVILLIERS CEDEX (FR)
(74) Mandataire: Atout PI Laplace

(57) **Abrégé**

L'invention concerne un procédé de configuration radio d'un ensemble de N bulles tactiques (10) dans le cadre de leur déploiement sur une zone d'intervention (Z) comprenant :
dans une première phase, détermination par simulation radio d'une ressource fréquentielle respective RFi et une puissance d'émission radio Pi pour chaque bulle tactique n°i (10), i = 1 à N, en fonction de la position relative des bulles et la nature du terrain sur la zone
dans une deuxième phase, une fois les bulles tactiques déployées (10) et configurées avec la ressource fréquentielle et la puissance respectives déterminées, calcul d'un niveau de performance radio des bulles en fonction de mesures collectées et comparaison dudit niveau avec un premier seuil de performance prédéfini ; modification des ressources fréquentielles ou puissances configurées jusqu'à remplir une condition prédéfinie.

## Description

### Domaine technique :

L'invention se situe dans le domaine des radiocommunications tactiques, qui, comme il est connu, fait référence à l'utilisation de réseaux de communication radio dans un contexte militaire ou opérationnel dans le cas, par exemple, d'un événement exceptionnel, tel une catastrophe naturelle.

On appelle ici bulle tactique un réseau de radiocommunications tactiques comprenant une station de base par exemple montée sur une plateforme mobile (tel un véhicule roulant ou volant) et plusieurs terminaux utilisateurs servis par cette station de base. Une bulle tactique est adaptée pour mettre en œuvre, de façon autonome, des radiocommunications entre les terminaux utilisateurs de la bulle, via leur station de base, sur la base de ressources de radiocommunications allouées à la bulle.

### Technique antérieure :

Les bulles tactiques doivent être aisément et rapidement déployables, en tout lieu. Une fois les bulles déployées sur le terrain, qu'elles soient fixes ou bien en mouvement, il est nécessaire d'assurer une continuité de service des communications mises en œuvre au sein de chaque bulle. Cependant, quand plusieurs bulles tactiques sont déployées sur une zone, il y a un risque d'interférence entre elles lorsqu'elles communiquent sur la même bande de fréquence.

Les solutions issues du cellulaire notamment telles que basées sur la réutilisation fréquentielle par configuration statique (Frequency reuse), ou les méthodes de type Inter Cell Interference Coordination (ICIC) ne sont pas satisfaisantes entre autres pour les raisons suivantes :
- elles impactent le composant dit scheduler auquel il n'y a généralement pas accès. Le scheduler est un composant au niveau du Radio Access Network (RAN), e.g. eNodeB en 4G ou gNB en 5G, associé à une station de base et adapté pour allouer dynamiquement au niveau MAC des ressources à un terminal utilisateur servi par cette station de base (ressources que le scheduler sélectionne parmi un ensemble de ressources indiquées accessibles au terminal utilisateur), de façon à optimiser les performances des réseaux sans fil ;
- elles sont adaptées aux cas de couvertures homogènes, alors que des contraintes opérationnelles donnent lieu à l'emplacement de bulles radio avec des couvertures non-homogènes ;
- la plupart de ces solutions s'appuient sur l'échange de signalisation sur l'interface X2 des stations de base ; or dans le cas de bulles tactiques, l'interface inter bulles n'est disponible que de manière intermittente.

Enfin, de nombreuses solutions s'appuient sur des méthodes d'apprentissage automatiques (machine learning), par exemple par renforcement, qui nécessitent un entraînement long incompatible avec les contraintes imposées par les cas d'usage ciblés, comme la rapidité de déploiement, et sont difficilement adaptées pour une généralisation à toutes topologies de bulles et à tout environnement radio.

### Résumé de l'invention :

A cet effet, suivant un premier aspect, la présente invention décrit un procédé de configuration radio d'un ensemble de N bulles tactiques dans le cadre de leur déploiement sur une zone d'intervention
chaque bulle tactique comportant un ensemble de terminaux radio et une station de base radio associée à un contrôleur radio, la station de base étant adaptée pour mettre en œuvre avec chaque terminal radio de la bulle, des radiocommunications,
selon lequel, dans une première phase, ledit procédé comprend les étapes suivantes mises en œuvre par un bloc électronique de configuration globale :
   - générer, en fonction de la position relative des bulles et la nature du terrain sur la zone d'intervention, un simulateur radio paramétrable en fonction d'un jeu de données d'entrée,
ledit jeu de données d'entrée spécifiant pour chaque bulle tactique n°i, i = 1 à N une ressource fréquentielle respective RFi et une puissance d'émission radio Pi,
ledit simulateur simulant la mise en œuvre de trafic radio dans les bulles tactiques sur la base d'un modèle de propagation défini en fonction de ladite nature de terrain, le trafic radio étant simulé dans chaque bulle tactique en fonction de la ressource fréquentielle et de la puissance d'émission radio spécifiées pour ladite bulle tactique dans le jeu de données d'entrée,
   - puis dans une première étape d'exploration, mettre en œuvre le premier processus suivant :
      choisir un nouveau jeu de données d'entrée du simulateur radio, dans lequel pour chaque bulle tactique une ressource fréquentielle respective RFi, et une puissance d'émission radio Pi sont choisies parmi un ensemble de ressources fréquentielles candidates respective et un ensemble de puissances d'émission radio candidates ;
      calculer, en fonction du trafic radio simulé par le simulateur radio paramétré avec le nouveau jeu de données d'entrée, la valeur d'au moins un indicateur de performance radio évaluant la qualité radio du trafic radio sur les bulles pour le nouveau jeu de données d'entrée,
      et l'itérer jusqu'à identifier un jeu de données d'entrée dit optimal telles que la valeur d'au moins le indicateur de performance radio pour ledit jeu de données d'entrée remplisse un critère prédéfini indiquant une performance radio considérée optimale ;
      une fois les bulles tactiques déployées dans lesdites positions relatives sur la zone d'intervention et configurées avec la ressource fréquentielle et la puissance respectives spécifiées pour chacune d'elle dans le jeu de données d'entrée identifié comme remplissant le critère prédéfini ;
      les étapes suivantes sont mises en œuvre dans une deuxième phase par le bloc électronique de configuration globale :
         collecte de valeurs d'indicateurs de la qualité radio dans les bulles déployées sur la zone d'intervention, lesdites valeurs d'indicateurs ayant été déterminées en fonction de mesures radio effectuées sur le trafic radio dans les bulles ;
         calcul d'un niveau de performance en fonction desdites valeurs collectées et comparaison dudit niveau avec un premier seuil de performance prédéfini ;
         si le niveau de performance calculé est supérieur au premier seuil de performance prédéfini, la configuration des bulles tactique est maintenue ;
         si le niveau de performance calculé est inférieur au premier seuil de performance prédéfini, dans une deuxième étape d'exploration, mettre en œuvre le deuxième processus suivant
         choisir un nouvel 2N-uplet RF1, P1, ..., RFN, PN pour les bulles tactiques dans lequel pour chaque bulle tactique une ressource fréquentielle respective RFi, et une puissance d'émission radio respective Pi sont choisies parmi un ensemble de ressources fréquentielles candidates et un ensemble de puissances d'émission radio candidates, déclencher auprès des contrôleurs radio des bulles tactiques, la reconfiguration des bulles tactiques sur la zone d'intervention selon ledit nouvel 2N-uplet, puis collecter des valeurs d'indicateurs de la qualité radio dans les bulles tactiques ainsi reconfigurées, déterminés en fonction de mesures radio effectuées sur le trafic radio dans les bulles et calculer un niveau de performance en fonction desdites valeurs collectées ;
         et l'itérer jusqu'à ce qu'à la survenue du premier événement parmi un temps limite prédéfini ou une nombre d'itérations maximum prédéfini soit atteint ou jusqu'à identifier un nouvel 2N-uplet dit optimal, pour lequel le niveau de performance calculé est supérieur au premier seuil de performance prédéfini, et alors maintenir la configuration des bulles tactiques.

L'invention offre ainsi une solution de configuration (et reconfiguration) autonome d'une fédération de bulles radio, applicable à toute topologie, quel que soit l'emplacement de ces bulles et sans planification préalable, garantissant un service minimal à chaque station de base.

Le procédé de configuration radio d'un ensemble de N bulles tactiques dans le cadre de leur déploiement sur une zone d'intervention selon l'invention permet ainsi d'allouer et de configurer automatiquement (sans planification préétablie), et de façon autonome, les ressources fréquentielles et de puissance pour chaque bulle, pour garantir un service minimal (exemple : débit minimal) aux utilisateurs de chacune des bulles. Ce procédé est par exemple mis en œuvre au moment du déploiement sur la zone et est par exemple itéré en phase opérationnelle s'il existe un besoin de reconfiguration.

La mise en œuvre du procédé lors de la configuration initiale doit être rapide pour une mise en opération rapide (pour que le service de connectivité soit disponible rapidement) et une mise en œuvre du procédé pour une reconfiguration doit se faire sans interruption de service pour les communications en cours.

Dans des modes de réalisation, un tel procédé comprendra en outre l'une au moins des caractéristiques suivantes :
- dans la deuxième phase, si le niveau de performance calculé est inférieur au premier seuil de performance prédéfini, ladite deuxième étape d'exploration n'est mise en œuvre que si le niveau de performance calculé est supérieur à un deuxième seuil de performance prédéfini ; et quand le niveau de performance calculé est inférieur au deuxième seuil de performance prédéfini, une étape de recalibrage du simulateur radio paramétrable est effectuée comprenant l'ajustement du modèle de propagation en fonction de mesures radio effectuées sur le trafic radio dans les bulles dans la deuxième phase ;
- le procédé de configuration radio d'un ensemble de N bulles tactiques comprend une étape de partitionnement des bulles en clusters telle que les bulles tactiques présentant le plus d'interférences entre elles étant regroupées au sein d'un même cluster, lesdites interférences étant estimées en fonction des distances entre les bulles et du modèle de propagation et l'une au moins des première et deuxième étapes d'exploration est mise en œuvre cluster par cluster ;
- lorsque la première étape d'exploration est mise en œuvre cluster par cluster, elle est mise en œuvre séquentiellement sur chaque cluster ; et/ou
   lorsque la deuxième étape d'exploration est mise en œuvre cluster par cluster, elle est mise en œuvre parallèlement sur chaque cluster ;
- lorsque la première étape d'exploration est mise en œuvre cluster par cluster, elle est mise en œuvre séquentiellement sur chaque cluster en ordonnant les clusters entre eux en fonction des interférences entre cluster ;
- dans l'une au moins des première et deuxième étapes d'exploration, une optimisation Bayésienne est mise en œuvre pour choisir lesdites ressources fréquentielles et puissances d'émission radio ;
- un mécanisme est mis en œuvre entre les contrôleurs radio des N bulles tactiques reliés par des liaisons de radiocommunications pour sélectionner entre eux un contrôleur radio maître, les autres étant des contrôleurs radio secondaires,
   chaque contrôleur radio comportant un bloc électronique de configuration globale, ledit un bloc électronique de configuration globale d'un contrôleur radio n'étant actif que lorsque le contrôleur radio a été sélectionné comme contrôleur radio maître ;
- dans la deuxième phase, lesdites valeurs d'indicateurs de la qualité radio dans les bulles collectées par le bloc électronique de configuration globale du contrôleur radio maître lui sont fournies par les contrôleurs radios des N bulles tactiques.

Suivant un autre aspect, l'invention décrit un bloc électronique de configuration globale d'un ensemble de N bulles tactiques dans le cadre de leur déploiement sur une zone d'intervention,
chaque bulle tactique comportant un ensemble de terminaux radio et une station de base radio associée à un contrôleur radio, la station de base étant adaptée pour mettre en œuvre avec chaque terminal radio de la bulle, des radiocommunications,
ledit bloc électronique de configuration globale étant adapté pour, dans une première phase, générer, en fonction de la position relative des bulles et la nature du terrain sur la zone d'intervention, un simulateur radio paramétrable en fonction d'un jeu de données d'entrée,
ledit jeu de données d'entrée spécifiant pour chaque bulle tactique n°i, i = 1 à N une ressource fréquentielle respective RFi et une puissance d'émission radio Pi,
ledit simulateur simulant la mise en œuvre de trafic radio dans les bulles tactiques sur la base d'un modèle de propagation défini en fonction de ladite nature de terrain, le trafic radio étant simulé dans chaque bulle tactique en fonction de la ressource fréquentielle et de la puissance d'émission radio spécifiées pour ladite bulle tactique dans le jeu de données d'entrée,
ledit bloc électronique de configuration globale étant adapté pour, dans une première étape d'exploration, mettre en œuvre le premier processus suivant :
   choisir un nouveau jeu de données d'entrée du simulateur radio, dans lequel pour chaque bulle tactique une ressource fréquentielle respective RFi, et une puissance d'émission radio Pi sont choisies parmi un ensemble de ressources fréquentielles candidates respective et un ensemble de puissances d'émission radio candidates ;
   calculer, en fonction du trafic radio simulé par le simulateur radio paramétré avec le nouveau jeu de données d'entrée, la valeur d'au moins un indicateur de performance radio évaluant la qualité radio du trafic radio sur les bulles pour le nouveau jeu de données d'entrée,
   et l'itérer jusqu'à identifier un jeu de données d'entrée dit optimal telles que la valeur d'au moins le indicateur de performance radio pour ledit jeu de données d'entrée remplisse un critère prédéfini indiquant une performance radio considérée optimale ;
   ledit bloc électronique de configuration globale étant adapté pour, une fois les bulles tactiques déployées dans lesdites positions relatives sur la zone d'intervention et configurées avec la ressource fréquentielle et la puissance respectives spécifiées pour chacune d'elle dans le jeu de données d'entrée identifié comme remplissant le critère prédéfini, dans une deuxième phase, collecter des valeurs d'indicateurs de la qualité radio dans les bulles déployées sur la zone d'intervention, lesdites valeurs d'indicateurs ayant été déterminées en fonction de mesures radio effectuées sur le trafic radio dans les bulles, puis calculer un niveau de performance en fonction desdites valeurs collectées et effectuer une comparaison dudit niveau avec un premier seuil de performance prédéfini ; si le niveau de performance calculé est supérieur au premier seuil de performance prédéfini, la configuration des bulles tactique est maintenue et si le niveau de performance calculé est inférieur au premier seuil de performance prédéfini, dans une deuxième étape d'exploration, ledit bloc électronique de configuration globale est adapté pour alors mettre en œuvre le deuxième processus suivant
   choisir un nouvel 2N-uplet RF1, P1, ..., RFN, PN pour les bulles tactiques dans lequel pour chaque bulle tactique une ressource fréquentielle respective RFi, et une puissance d'émission radio respective Pi sont choisies parmi un ensemble de ressources fréquentielles candidates et un ensemble de puissances d'émission radio candidates, déclencher auprès des contrôleurs radio des bulles tactiques, la reconfiguration des bulles tactiques sur la zone d'intervention selon ledit nouvel 2N-uplet, puis collecter des valeurs d'indicateurs de la qualité radio dans les bulles tactiques ainsi reconfigurées, déterminés en fonction de mesures radio effectuées sur le trafic radio dans les bulles et calcul d'un niveau de performance en fonction desdites valeurs collectées
   et pour l'itérer jusqu'à ce qu'à la survenue du premier événement parmi un temps limite prédéfini ou une nombre d'itérations maximum prédéfini soit atteint ou jusqu'à identifier un nouvel 2N-uplet dit optimal, pour lequel le niveau de performance calculé est supérieur au premier seuil de performance prédéfini, et alors maintenir la configuration des bulles tactiques.

Suivant un autre aspect, l'invention décrit un produit programme d'ordinateur destiné à être stocké dans la mémoire d'un bloc électronique de configuration globale et comprenant en outre un microcalculateur, ledit programme comprenant des instructions logicielles pour la mise en œuvre d'un procédé comme décrit auparavant.

L'invention décrit également un support d'enregistrement lisible par ordinateur stockant un tel programme d'ordinateur. De tels supports d'enregistrement peuvent comporter un moyen de stockage, tel qu'une ROM, par exemple un CD ROM ou une ROM de circuit microélectronique, ou encore un moyen d'enregistrement magnétique, par exemple une clé USB ou un disque dur. De tels supports d'enregistrement peuvent être des supports transmissibles tel qu'un signal électrique ou optique, qui peut être acheminé via un câble électrique ou optique, par radio ou par d'autres moyens, de sorte que le programme d'ordinateur qu'il contient est exécutable à distance. Les programmes selon l'invention peuvent être en particulier téléchargés sur un réseau par exemple le réseau Internet. De tels supports d'enregistrement peuvent comprendre un circuit intégré dans lequel le programme est incorporé, le circuit étant adapté pour exécuter ou pour être utilisé dans l'exécution du procédé de contrôle d'affichage précité.

### Brève description des figures :

L'invention sera mieux comprise et d'autres caractéristiques, détails et avantages apparaîtront mieux à la lecture de la description qui suit, donnée à titre non limitatif, et grâce aux figures annexées, données à titre d'exemple.
[Fig. 1] La figure 1 représente une zone d'intervention sur laquelle plusieurs bulles tactiques sont déployées ;
[Fig. 2] La figure 2 représente schématiquement un contrôleur radio, une station de base radio et des terminaux utilisateurs dans un mode de réalisation de l'invention ;
[Fig. 3] La figure 3 représente des étapes d'un procédé de configuration globale mis en œuvre dans un mode de réalisation de l'invention ;
[Fig. 4] La figure 4 synthétise des flux de traitement mis en œuvre par (et entre) le dispositif maître actif du contrôleur radio maître et le dispositif de contrôle 421 de chaque RC 40 dans un mode de réalisation de l'invention ;
[Fig. 5] La figure 5 illustre un processus itératif d'optimisation bayésienne ;
[Fig. 6] La figure 6 illustre une recherche de configuration offline avec clustering dans la sous-étape 102 dans un mode de réalisation de l'invention ;
[Fig. 7] La figure 7 représente les ressources fréquentielles candidates BW_0, ..., BW_9 candidates pour chaque bulle tactique dans un mode de réalisation de l'invention ;
[Fig. 8] La figure 8 représente des étapes d'un procédé de configuration de repli mis en œuvre dans un mode de réalisation de l'invention ;
[Fig. 9] La figure 9 illustre la sélection des BWP_i, i = 0 à 3, activables en fonction de la ressource fréquentielle sélectionnée BWP_8 pour une des bulles, dans un mode de réalisation.

Des références identiques peuvent être utilisées dans des figures différentes lorsqu'elles désignent des éléments identiques ou comparables.

### Description détaillée :

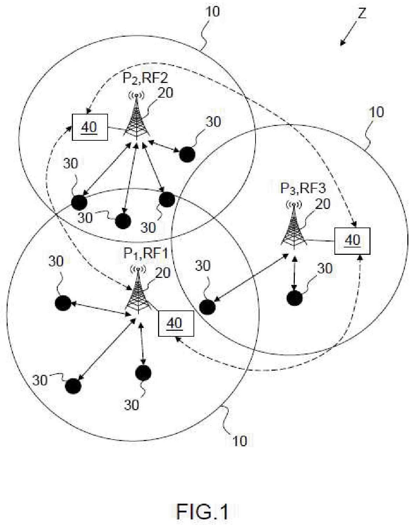

A titre d'illustration, il est considéré en référence à la figure 1, une situation de déploiement de *N* bulles tactiques 10 (avec *N* entier quelconque strictement supérieur à 1, sur la figure 1, *N* = 3) sur une zone d'intervention Z, en des emplacements non connus a priori et déterminés en temps réel selon des exigences opérationnelles.

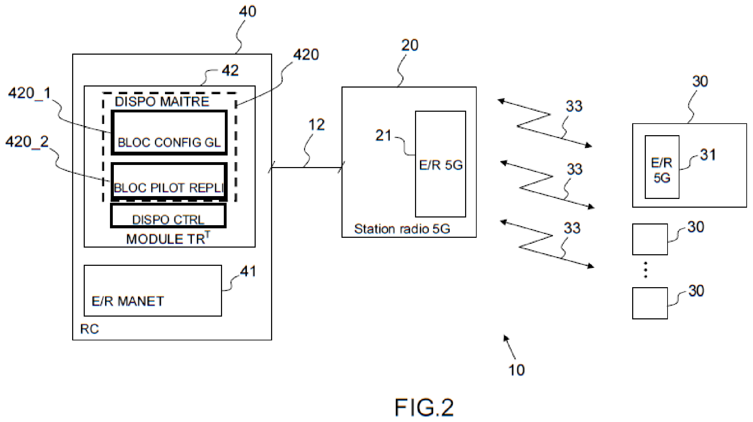

En référence aux figures 1 et 2, chaque bulle tactique 10 est un réseau de radiocommunication autonome ; une bulle tactique 10 comporte une station de base radio 20, un contrôleur radio 40 et des terminaux utilisateurs 30 attachés à la station de base 20 et servis par cette dernière.

La station de base radio 20 d'une bulle 10 comporte un bloc d'émission/réception de radiocommunication 21 (bloc E/R 21). Chaque terminal utilisateur 30 comporte un bloc d'émission/réception de radiocommunication 31 (bloc E/R 31). La station de base radio d'une bulle 10, via son bloc E/R 21 est adaptée, une fois fixée la configuration des ressources radio, pour établir des liaisons radio 33 et mettre en œuvre des échanges de données radio en réception et en émission, avec les terminaux utilisateurs 30 qui sont rattachés à la station 20, via leur bloc E/R 31, selon un protocole de radiocommunication fixé, par exemple de type 3GPP pour les réseaux mobiles. Ici il est considéré à titre d'exemple non limitatif que le protocole 3GPP de 5e génération (5G) est mis en œuvre au sein de la bulle tactique.

Le contrôleur radio 40, de type Radio Access Network (RAN) Intelligent Controller Lite (appelé ici RC 40) dans chaque bulle 10 assure la configuration radio de la station de base radio 20 de cette bulle 10, notamment, dans une architecture distribuée.

Le RC 40 de chaque bulle est par exemple colocalisé avec la station de base radio 20 de la bulle ; ils sont par exemple embarqués sur la même plateforme mobile (véhicule terrestre, aéronef par exemple) et ils sont connectés l'un à l'autre par une liaison de données filaire 12.

Chaque RC 40 comporte, en référence à la figure 2, un bloc de radio-transmission 41, adapté pour mettre en œuvre des télécommunications entre les RC 40 de l'ensemble des bulles 10 sur la zone d'intervention Z. Le protocole radio mis en œuvre pour ces échanges est dans le cas considéré de type réseau mobile ad hoc (MANET pour 'Mobile Ad Hoc Network') mais peut être autre (par exemple, certains au moins des RCs sont interconnectés par des liaisons satellites dans des modes de réalisation). Dans des modes de réalisation, certains au moins des RCs sont interconnectés par des liaisons filaires à la place ou en plus des liaisons radio.

Dans le mode de réalisation considéré, les fonctions effectivement actives de chaque RC 40 dépendent du statut « Primaire » (dit aussi « Maître ») ou du statut « Secondaire » qui est attribué au RC, sachant qu'il existe un mécanisme d'attribution du statut primaire ou secondaire à chaque RC dès la mise en service des bulles, le type de statut étant ensuite réactualisé ; ce mécanisme n'est pas détaillé ici ; il existe plusieurs techniques connues de l'homme du métier pour mettre en œuvre de tels mécanismes de fixation de statuts primaire/secondaire dans un environnement radio. Sur la zone d'intervention Z, à chaque instant donné, un, et un seul, RC 40 a un statut maître, les autres ont un statut secondaire.

En référence à la figure 2, chaque RC 40 comporte un module de traitement 42, qui comporte un dispositif de traitement maître 420, adapté pour être actif seulement quand le RC 40 a le statut Primaire, et contraint à rester inactif quand le RC 40 a le statut Secondaire.

### CONFIGURATION GLOBALE

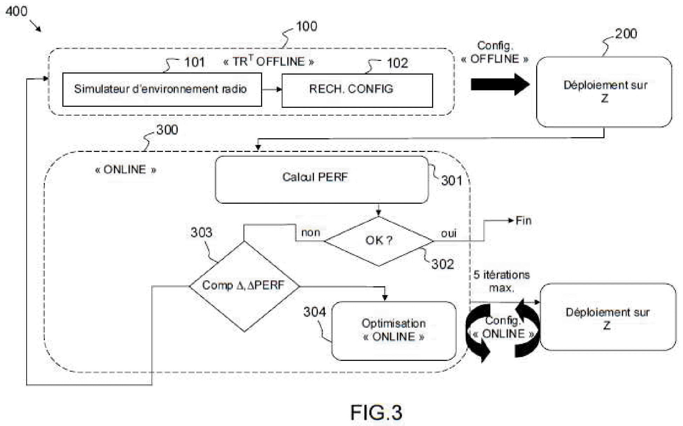

Il est à présent décrit une solution de configuration autonome d'une fédération de *N* bulles radio en deux étapes. Cette solution s'appuie sur un procédé dit de configuration globale 400, en référence à la figure 3 prenant en compte les N bulles 10 considérées et qui est mis en œuvre par un bloc de configuration globale 420_1 dans le dispositif maître actif 420, par exemple au démarrage des bulles une fois ces dernières installées sur la zone d'intervention (ou préalablement à l'installation ou alors après leur démarrage, au fil de la vie opérationnelle du groupe des bulles, par exemple sur commande de reconfiguration reçue par le dispositif de configuration globale).

Dans le mode de réalisation considéré, chaque RC 40 comporte un bloc de configuration globale 420_1, adapté, donc, pour être opérationnel uniquement lorsque le RC a un statut primaire.

Le bloc de configuration globale 420_1 est adapté pour, dans le RC maître 40, mettre en œuvre une première étape 100, dite étape de configuration globale « TRAITEMENT OFFLINE » 100, encore appelée optimisation OFFLINE, en référence à la figure 3.

A ce stade, la position relative des N bulles sur la zone Z est connue et fixe, et la nature du terrain de la zone d'intervention Z est connue.

L'étape « OFFLINE » 100 comprend d'abord une sous-étape 101, dans laquelle, en fonction d'un jeu de données d'entrée listées ci-après, le bloc de configuration globale 420_1, génère un simulateur d'environnement radio, dit "environnement Offline", qui est adapté pour modéliser la propagation radio dans la zone d'intervention Z sur un terrain de nature connue. L'environnement Offline simule du trafic radio (les radio-transmissions se propageant conformément au modèle) dans les bulles et calcule des 'mesures' radio relatives aux radiotransmissions simulées résultant du jeu de données d'entrée, ainsi que d'autres indicateurs évaluant des performances radio. Ces 'mesures' radio calculées sur la base de la simulation comportent par exemple, sur lien montant et lien descendant dans chaque bulle dans la simulation, l'une et ou l'autre de ces mesures usuelles des normes 3GPP : un ou des indicateurs de performance, par exemple indicateur de performance clé (KPI pour l'anglais « Key Performance Indicator ») comme indicateur de qualité de canal (CQI pour Channel Quality Indicator), schéma de modulation et codage (MCS pour l'anglais « Modulation and Coding Scheme »), taux de retransmission des paquets, ...

Il est considéré que chaque bulle est associée à un ensemble de ressources fréquentielles candidates et à un ensemble de puissance candidates (ces ensembles candidats sont les mêmes pour différentes bulles, ou pas suivant les situations). Les ressources fréquentielles candidates correspondent par exemple à des fréquences candidates et/ou des sous-bandes de fréquence candidates, avec des tailles différentes ou égales suivant les modes de réalisation.

Le but est d'identifier pour chaque bulle la ressource fréquentielle et la puissance qui sont optimales, au regard de critères prédéfinis définissant cet optimum. La bulle sera ensuite configurée selon cette ressource fréquentielle et cette puissance optimale, c'est-à-dire que les radiocommunications mises en œuvre dans une bulle entre la station de base et chacun des terminaux auront lieu sélectivement sur cette ressource fréquentielle (et pas une des autres ressources fréquentielles candidates) et que la puissance émise des émissions radio par la station de base sera égale (ou inférieure) à la puissance optimale.

Le jeu de données d'entrée du simulateur radio comporte notamment les données suivantes ou au moins certaines d'entre elles, suivant les modes de réalisation :
- une ressource fréquentielle fixée pour chacune des N bulles, (RFi, i = 1 à N), sélectionnée dans l'ensemble de ressources fréquentielles candidates par bulle,
- une puissance fixée par bulle (Pi, i = 1 à N), sélectionnée dans l'ensemble de puissances candidates par bulle (dans un mode de réalisation, l'ensemble de puissances candidates est une plage de fréquences),
- les positions des bulles 10 (au moins) relatives entre elles (par exemple en prenant un repère avec une origine en une des bulles et un système d'axes 3D),
- des hypothèses caractérisant la nature du terrain de la zone d'intervention Z et indiquant le type d'environnement radio (propagation), tel que : environnement rural (champs), rural (forêt), désert, urbain, urbain dense et/ou le modèle numérique de terrain (MNT) décrivant la topographie (altimétrie), les bâtis, les obstacles.

Le simulateur d'environnement Offline ainsi généré est adapté pour simuler des transmissions radio des N bulles (pour un nombre donné de terminaux à servir dans chaque bulle, par exemple un nombre moyen ou minimum) dans les conditions définies par les données qui lui sont indiquées en entrée :
- propagation radio conforme au type de terrain indiqué en entrée ;
- position relative des bulles telles qu'indiquée en entrée ;
   dans chaque bulle n°i, i = 1 à N, la puissance des émissions de la station de base/des terminaux utilisateurs doit être égale à la puissance indiquée spécifiquement pour la bulle en entrée (Pi) et les émissions sont effectuées sélectivement sur la ressource fréquentielle indiquée en entrée pour la bulle.

Dans une sous-étape 102, le bloc de configuration globale 420_1 détermine des jeux de données d'entrée successifs distincts dans lesquels il choisit des attributions respectives de puissance et/ou de fréquence aux N bulles (la position relative des N bulles une fois déployées sur la zone étant fixe, ainsi que la nature du terrain de la zone d'intervention Z) et les fournit en entrée du simulateur radio. Chaque nouveau jeu de données d'entrée déterminée est fourni en entrée du simulateur d'environnement Offline. Le bloc de configuration globale 420_1 obtient ainsi successivement les mesures radios délivrées par le simulateur d'environnement radio et relatives aux transmissions radio dans la simulation effectuée pour chacun de ces jeux de données d'entrée.

Les mesures radio issues de chaque simulation sont utilisées par le bloc de configuration globale 420_1 (ou par le simulateur directement) pour en déduire, pour la simulation considérée, un ou des indicateurs de qualité de service radio : par exemple dans un premier temps un ou des indicateurs de satisfaction de performance pour chaque terminal utilisateur de chaque bulle, puis pour dériver un ou des indicateurs de satisfaction de performances par bulle en fonction des indicateurs de satisfaction de performance de tous les terminaux utilisateurs d'une même bulle.

Dans cette sous-étape 102, le bloc de configuration globale 420_1 explore ainsi un certain nombre de jeux de données d'entrée jusqu'à ce qu'il identifie in fine, parmi ces jeux de données explorés, un jeu de données d'entrée optimal, selon un ou des critères d'optimum prédéfinis.

Typiquement, le bloc de configuration globale 420_1 cherche à identifier quelle configuration pour les N bulles, définie par l'ensemble {RF1, P1, ... RFN, PN} optimise une fonction objectif (prédéfinie à l'aide d'un ou plusieurs indicateurs de qualité radio), ou maximise un indicateur de qualité radio exemple parmi : taux de satisfaction de performances radio par bulle et/ou débits obtenus et/ou rapports signal sur bruit (SNR), signal sur interférence (SIR), signal sur bruit plus interférence (SINR) calculés en fonction des mesures radio issues de la simulation (SINR), KPI, etc.

Le critère d'optimum dans un mode de réalisation est par exemple de sélectionner la configuration correspondant à un maximum d'un indicateur ou aux maxima de plusieurs des indicateurs (ou au maximum d'une fonction de ces indicateurs) ou encore de dépasser un seuil minimal pour un indicateur parmi ceux listés ci-dessous (ou pour une fonction de ces éléments) : par exemple correspondant à un taux de satisfaction de performances radio minimal fixé par bulle et/ou d'un débit minimal à respecter par communication etc.

Dans un mode de réalisation, la fonction objectif prédéfinie est fonction d'un débit minimal à garantir par communication de chaque terminal utilisateur et/ou d'un indicateur d'équité α entre bulles qui est un paramètre configurable.

L'indicateur d'équité α entre bulles respecté limite les déséquilibres possibles entre les performances de bulles différentes, par exemple un déséquilibre en débit (par exemple, les services offerts par chacune de deux bulles extrêmement proches, et donc potentiellement interférentes sont différents et il peut être souhaité de garantir une connectivité équitable entre les 2 bulles et d'éviter que la puissance d'une des bulles soit beaucoup plus grande que celle de l'autre des deux bulles).

Dans un mode de réalisation, la fonction objectif prédéfinie a pour critère un pourcentage de terminaux utilisateurs respectant un débit minimum. L'expression de cette fonction 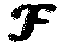 est décrite ci-dessous : 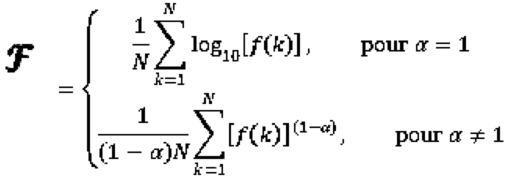 avec 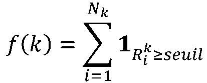 où *Nₖ* est le nombre d'utilisateurs dans la bulle *k,* ${R}_{i}^{k}$ est le débit de l'utilisateur *i* de la bulle *k,* ${1}_{{SINR}_{i}^{k} \geq seuil}$ est la fonction indicatrice valant 1 si ${R}_{i}^{k} \geq seuil$ *seuil* et 0 sinon.

La valeur de α est fixée à une valeur entre 0 et l'infini, par exemple :
- α =0 : correspond à privilégier l'efficacité
- α =1 : correspond à un compromis entre l'efficacité et l'équité
- α =∞ : correspond à privilégier l'équité.

Par exemple, dans la sous-étape 102, le bloc de configuration globale 420_1 entraîne un modèle d'apprentissage automatique à partir de mesures radios obtenues via le simulateur d'environnement radio. A l'issue de la phase d'entraînement, le modèle entraîné permet d'optimiser la configuration radio à appliquer sur l'environnement Offline, et donc pour chacune des N bulles sur la zone d'intervention, i.e. d'identifier quelle ressource fréquentielle et quelle puissance d'émission doivent être définies pour chaque bulle déployée de façon à maximiser une fonction objectif qui a été prédéfinie.

Dans une étape 200 (cf. figure 3), la configuration radio (« configuration radio Offline ») sélectivement définie pour la bulle 10 n°i (i= 1 à N) à l'issue de l'étape 100 est transmise par le bloc de configuration globale 420_1 du RC 40 maître à destination du dispositif de contrôle 421 du RC 40 (maître ou secondaire) attaché à la bulle n°i, pour mise en œuvre par le RC sur cette bulle, de la configuration radio Offline (ressource fréquentielle et puissance). Cette transmission a lieu via le réseau MANET inter-RC depuis le RC maître vers les RCs secondaires, et simplement localement via un câble de transmission de données, du bloc de configuration globale 420_1 du RC 40 maître vers le dispositif de contrôle 421 du RC maître.

Ainsi la configuration suite au traitement OFFLINE, qui porte sur chaque bulle de la zone se retrouve alors implémentée sur chaque bulle.

Toutes les transmissions MANET mises en œuvre par un RC vers un RC comprennent un identifiant de la bulle du RC d'où provient la transmission.

Dans une étape 300 dite « ONLINE », après ce déploiement sur la zone d'intervention Z de la configuration Offline, la configuration offline théorique alors implémentée sur la zone est validée ou actualisée de la manière décrite maintenant.

Dans une sous-étape 301, le bloc de configuration globale 420_1 détermine les performances radio réelles sur le terrain au niveau de chacune des N bulles 10 en calculant les indicateurs de qualité radio et/ou la fonction objectif à partir des mesures radio réelles cette fois, disponibles par terminal utilisateur (liens descendant et montant).

Pour ce faire, par exemple, dans chaque bulle, les mesures radio par terminaux utilisateur (sur le lien montant et donc nativement mesurées par la station de base, ou sur le lien descendant et donc mesurées par le terminal puis remontées vers la station de base) sont agrégées sur une fenêtre de temps courte à partir de laquelle un indicateur de satisfaction de performances radio global à tous les utilisateurs de la bulle, est calculé et transmis par le dispositif de contrôle du RC de la bulle au bloc de configuration globale 420_1 du RC maître. RC

Les indicateurs de performances sont par exemples basés sur les KPI.

Dans une sous-étape 302, le bloc de configuration globale 420_1 du RC maître détermine en fonction des indicateurs de satisfaction de performances radio des bulles issus des mesures sur le terrain si la configuration déployée est satisfaisante (par exemple par comparaison avec un seuil cible d'un indicateur calculé avec des indicateurs de satisfaction de performances radio des bulles ou éventuellement en calculant la fonction objectif et en la comparant avec un seuil minimum ; par exemple les indicateurs de performance par bulle obtenus sont agrégés pour en calculer un score/indicateur de performance globale notamment en utilisant la formule 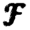 et un coefficient d'équité donné).

Si elles sont satisfaisantes, la configuration globale est achevée.

Si elles ne sont pas satisfaisantes (notamment du fait de distorsions entre le canal de propagation terrain et l'environnement 'offline'), un ajustement de la configuration globale est déclenché, de manière itérative si besoin.

Dans un autre mode de réalisation, la détermination de si la configuration déployée dans une bulle est satisfaisante est effectuée par le dispositif de contrôle du RC de la bulle, en fonction de l'indicateur de satisfaction de performances radio relative à chaque bulle et issu des mesures sur le terrain ; le dispositif de contrôle du RC déclenche un ajustement de la configuration globale auprès du RC maître si la configuration est déterminée non satisfaisante.

Dans le cas du déclenchement d'un ajustement de configuration globale, dans un mode de réalisation, dans une sous-étape 303, l'écart Δ, entre le seuil cible et la valeur de l'indicateur précédemment comparé avec le seuil cible est comparé à un écart maximum Δmax. Deux situations peuvent alors se présenter.

Si le bloc de configuration globale 420_1 du RC maître détermine (1ère situation), lors de cette comparaison, que Δ est inférieur ou égal à Δmax (i.e. l'environnement radio sur le terrain est proche du modèle considéré Offline), alors dans une sous-étape 304 dite étape d'optimisation Online, il ajuste itérativement les ressources fréquentielles et les puissances des bulles : chaque itération comprend la détermination d'une configuration actualisée a priori plus satisfaisante que la précédente, puis le déclenchement du déploiement de cette configuration actualisée sur le terrain (similairement à l'étape 200), puis l'évaluation de si la configuration actualisée se révèle satisfaisante une fois déployée (similairement aux sous-étapes 301, 302). Dans un mode de réalisation, le nombre d'itérations est strictement limité (par exemple 5 itérations maximum) de façon à minimiser l'impact de cette phase exploratoire sur les performances terrain (par exemple, le processus comprenant l'offline 100 et l'optimisation Online 304 comprenant toutes les éventuelles itérations doit impérativement être inférieur à 5 minutes. Une itération de la phase Online 304 doit durer moins d'une minute (c'est une phase où les terminaux utilisateurs sont déjà connectés sur le terrain), dans un mode de réalisation. Dans un mode de réalisation, si les performances ne sont pas atteintes en une durée max (cf contraintes définies plus haut), la configuration choisie est celle qui maximise la fonction objectif parmi les configurations calculées sur les précédentes itérations.

Si le bloc de configuration globale 420_1 du RC maître détermine (2ème situation), lors de la comparaison 303, que Δ est supérieur à Δmax (i.e. l'environnement radio sur le terrain est très différent du modèle considéré Offline), alors le bloc de configuration globale 420_1 du RC maître déclenche une recalibration du simulateur radio (précédemment généré à l'étape 100) à partir des mesures radio issus du terrain et une nouvelle étape Offline 100 est exécutée. Par exemple, dans un tel cas, les dispositifs de contrôle 421 des RC remontent vers le bloc de configuration globale 420_1 du RC maître les mesures radio agrégées et statistiques radio représentatif de la nature du terrain (typiquement path loss, timing advance, rsrp, ...), qui sont alors utilisées pour recalibrer le modèle de propagation du simulateur offline.

Le temps de convergence global vers une configuration jugée satisfaisante doit être rapide de façon à assurer une mise en fonction la plus rapide possible.

L'étape 303 est optionnelle. Dans un mode de réalisation, après un test non réussi lors de la sous-étape 302, seule l'optimisation Online 304 est par exemple déclenchée.

Dans un mode de réalisation, une fois la configuration globale déployée validée, le bloc de configuration globale 420_1 teste, de façon cyclique et/ou sur commande reçue, si les performances radio sur le terrain sont satisfaisantes. Et dans le cas contraire, il déclenche une optimisation Online 304 ou un traitement Offline 100 (avec recalibration du simulateur si nécessaire), idem s'il est détecté que les positions relatives des bulles ont évolué (les positions des bulles étant régulièrement fournies au dispositif maître 420 du RC maître par le dispositif de contrôle 120 du RC de chaque bulle ou en cas de perturbations importantes/prolongées).

Dans un mode de réalisation, en l'absence d'information sur la position des bulles, empêchant ainsi le traitement offline 100, le processus online 300 est déclenché par défaut sur la base d'une configuration radio initiale prédéfinie par défaut.

### Utilisation d'un traitement d'optimisation Bayésienne

Dans un mode de réalisation particulier, pour converger au plus vite vers une configuration satisfaisante, le bloc de configuration globale 420_1 met en œuvre, dans la sous-étape 102 et/ou la sous-étape 304, un traitement d'optimisation Bayésienne pour déterminer successivement les différentes configurations à explorer lors des itérations.

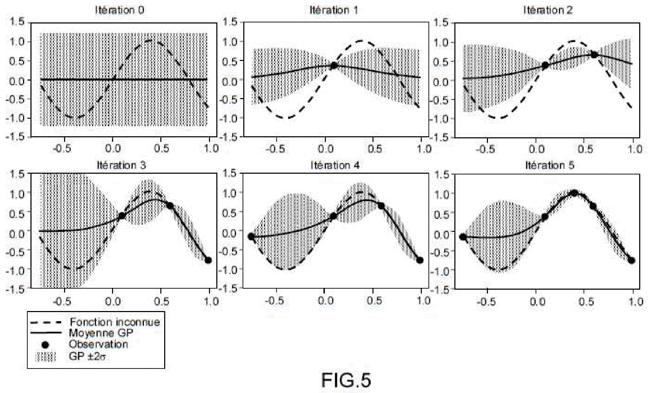

En référence à la figure 5 qui illustre à titre d'exemple la mise en œuvre de 5 itérations successives par optimisation Bayésienne (cette figure est extraite de "Bayesian Optimization for Radio Resource Management: Open Loop Power Control", Lorenzo Maggi, Alvaro Valcarce, and Jakob Hoydis, IEEE Journal on Selected Areas in Communications, Year: 2021, Volume: 39, Issue: 7, Pages: 1858-1871, figure 2). Dans cette figure, le but est de rechercher le maximum d'une fonction inconnue, représentée en pointillés, sans avoir à en calculer tous les points. Typiquement dans le procédé 400 de configuration globale, on cherche la configuration correspondant au maximum de la fonction objectif (ou de l'indicateur de performance à maximiser). L'optimisation Bayésienne est une méthode de machine learning consistant à construire un modèle probabiliste pour modéliser la fonction objectif. Ce modèle sélectionne les prochains points à évaluer de manière à trouver l'optimum avec un minimum de points évalués. Cette fonction objectif étant inconnue, la stratégie de l'optimisation bayésienne est de la considérer inconnue et à lui appliquer un prior, qui est une probabilité qui capte la connaissance « a priori » concernant le comportement de la fonction. A chaque collecte de points d'évaluation de la fonction objectif, le prior se met à jour pour former le posterior ou distribution a posteriori (probabilité recalculée après avoir obtenu une nouvelle information, selon le théorème de Bayes). Le posterior est alors utilisé pour construire une fonction d'acquisition (e.g. probabilité d'amélioration, amélioration attendue, etc.), qui détermine le prochain point à évaluer. En termes d'implémentation, les priors et posteriors peuvent être estimés de plusieurs manières, mais la plus courante, qui est celle que l'on a utilisée, est l'utilisation des processus gaussiens (GP en acronyme anglais). Concrètement, le posterior est estimé avec les GP et possède donc une moyenne (qui représente la fonction objectif estimée illustrée par la fonction pointillée sur la figure 5) et un écart-type σ (similaire à un intervalle de confiance, illustrée par la zone grisée sur la figure 5). Les points sur la figure 5 correspondent à la valeur prise par la fonction d'acquisition à maximiser pour des situations explorées (dans notre cas, la valeur de la fonction objectif pour des configurations explorées à la sous-étape 102. L'écart-type σ s'affaiblit donc à mesure que GP se rapproche d'un point déjà observé. L'optimisation Bayésienne exploite les points connus déjà, donc l'ensemble des événements précédemment observés, et la moyenne et la dispersion de GP, pour inférer la probabilité des événements non encore observés et décider le prochain point à observer (dans notre cas, la prochaine configuration à explorer). Cette approche permet de résoudre des problèmes d'optimisation en peu d'itération et lorsque la fonction à optimiser est une « boite-noire ». Elle est donc très adaptée aux problèmes avec une fonction objectif complexe ou à nos cas d'usage nécessitant une résolution rapide.

### Déploiement dense

Dans le cas de déploiements denses (par exemple N supérieur à Nmax, pour une valeur de Nmax par exemple choisie égale à 5, 10, ou 15, ou 20 etc.), à cause du grand nombre de paramètres à optimiser (choix de la ressource fréquentielle et puissance par bulle lorsqu'il y a beaucoup de bulles) pour l'ensemble de la topologie, la mise en œuvre d'une optimisation bayésienne ou de toute autre technique guidant l'exploration des configurations pour trouver celle satisfaisant au critère retenu est coûteuse en termes de calcul et de temps. En particulier pour l'optimisation Bayésienne, les performances peuvent être dégradées lorsque le nombre de paramètres à optimiser est plus grand que 20 à cause du fléau de la dimension (Frazier, P. I., "A Tutorial on Bayesian Optimization", arXiv e-prints, Art. no. arXiv:1807.02811, 2018. doi:10.48550/arXiv.1807.02811.) C'est pourquoi, dans un mode de réalisation, les bulles sont partitionnées en clusters par le bloc de configuration globale 420_1 du RC maître et le processus de recherche de configuration de la sous-étape 102 et/ou dans la sous-étape 304 d'optimisation Online est alors appliqué par cluster.

L'algorithme de clustering utilise, dans un mode de réalisation, comme critère de regroupement des bulles dans un même cluster (critère de 'similarité') l'interférence radio inter bulles : il cherche à regrouper des bulles qui s'interfèrent dans un même cluster et des bulles qui s'interfèrent peu dans des clusters différents. Deux bulles sont regroupées dans un même cluster si l'interférence entre ces bulles (interférence inter bulle) est élevée ; l'interférence inter-cluster, c'est-à-dire entre deux bulles associées à des clusters différents, est faible.

Les interférences inter bulles sont estimées par le bloc de configuration globale 420_1 à partir d'informations telles que les positions relatives entre les bulles et des hypothèses sur les caractéristiques de propagation et de perte de trajet (en anglais « pathloss ») (donc indépendamment d'une quelconque configuration des bulles en ressource fréquentielle et puissance).

A titre d'exemple : l'une des méthodes de clustering suivantes est utilisée : partitionnement spectral (en anglais « spectral clustering »), propagation d'affinité « affinity propagation » ...

L'algorithme spectral clustering gère une optimisation, un compromis entre :
- différencier les nœuds (i.e. bulles) dissimilaires dans des clusters différents (interférences faibles inter-bulles dans des clusters différents)
- assembler dans un cluster les nœuds similaires (interférences élevées inter-bulles dans un même cluster).

Le spectral clustering exploite les propriétés spectrales (valeurs propres) d'une matrice de similarité pour segmenter un graphe (représentant les données reliées avec plus ou moins de similarité) en plusieurs groupes ayant plus ou moins de similarité.

Dans des modes de réalisation, ce regroupement en clusters avant l'étape de recherche de maximum (notamment par optimisation Bayésienne ou toute autre méthode de recherche de maximum est effectué par le bloc de configuration globale 420_1 dans les explorations de configuration mises en œuvre dans la sous-étape 102 de recherche de configuration Offline et/ou dans la sous-étape 304 d'optimisation Online.

Dans un mode de réalisation, l'optimisation Bayésienne est alors effectuée :
- par cluster de façon séquentielle dans la sous-étape 102 de recherche de configuration Offline par le bloc de configuration globale 420_1 ;
- par cluster, en parallèle sur chaque cluster dans la sous-étape 304 d'optimisation Online.

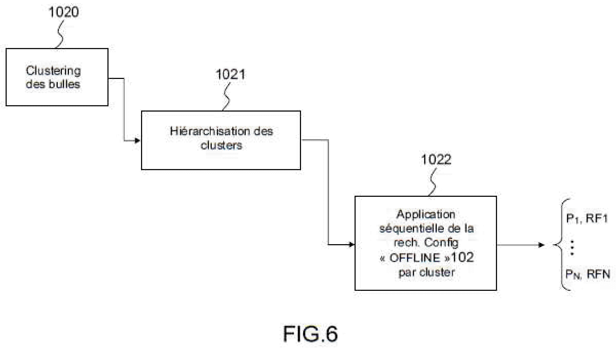

En référence à la figure 6, dans un mode de réalisation, une optimisation bayésienne avec clustering dans la sous-étape 102 de recherche de configuration Offline comprend successivement :
- une sous-étape 1020 de répartition des bulles dans des clusters (de façon à limiter les interférences inter-cluster et à permettre de traiter l'interférence intra-cluster par processus d'optimisation bayésienne),
- une sous-étape 1021 de hiérarchisation des clusters entre eux pour déterminer l'ordre d'application de l'optimisation bayésienne par cluster : cette hiérarchisation peut, par exemple, prendre en compte successivement les allocations sur les clusters traités et minimiser ainsi l'interférence inter Cluster résiduelle ; typiquement est mis en priorité maximum, priomax, le cluster de bulles présentant le plus d'interférences inter bulles (au sein du cluster), puis vient le cluster de priorité priomax-1, qui est celui parmi les clusters restants, qui interfère le plus avec le cluster de priorité maximum, puis vient en priorité priomax-2, le cluster de bulles présentant le plus d'interférences avec les deux précédents, etc., jusqu'au cluster de priorité minimum priomax-p+1 (si p est le nombre de clusters défini dans la sous-étape 1020) ;
- une sous-étape 1022 d'optimisation Bayésienne, appliquée séquentiellement par cluster selon l'ordre d'application correspondant à la hiérarchisation 1021 : à l'issue de cette étape sont ainsi déterminées l'allocation des ressources fréquentielles par bulle et la puissance par bulle.

Dans la sous-étape 1021, les deux types de niveaux d'interférence suivants sont considérés :
- le niveau d'interférence intra-cluster (niveau d'interférence entre les différentes bulles au sein du cluster en moyenne) ;
- le niveau d'interférence inter-cluster (niveau d'interférence d'un cluster sur un autre cluster en moyenne). Pour cela, en simulation, sont « allumés » le/les cluster(s) déjà configurés et le processus « allume » un à un les clusters non encore traités.

Dans un premier temps, une matrice d'interférence inter-bulle issue de la matrice de pathloss est créée. Elle va indiquer le pourcentage de terminaux utilisateurs interférés (se trouvant au-dessus d'un certain seuil de perte de trajet (« pathloss ») de taille N x N. Elle va donc nous afficher l'impact de chaque bulle sur les autres bulles.

Dans un second temps est créée une seconde matrice d'interférence inter-cluster issue de notre matrice d'interférence inter-bulle. Elle va représenter l'impact de chaque cluster de bulles sur les autres clusters et sera de taille nb cluster x nb cluster. Pour cela, pour chaque élément de la matrice, e.g. influence d'un cluster A à un cluster B, on moyenne les pourcentages de terminaux utilisateurs interférés calculées précédemment dans la matrice d'interférence inter-bulle, parmi toutes les bulles des clusters A et B.

Dans la sous-étape 1022, typiquement, une optimisation bayésienne relative au cluster de priorité maximum, priomax, est tout d'abord effectuée pour déterminer la configuration optimale des seules bulles de ce cluster (la fonction objectif ne prend donc en compte que ces bulles et le jeu de données d'entrée du simulateur ne comprend que les fréquences et puissances de ces bulles. Ensuite une optimisation bayésienne relative au cluster de priorité juste inférieure à la priorité maximum, priomax-1, est effectuée pour déterminer la configuration optimale des seules bulles de ce cluster, en tenant compte aussi de la configuration radio telle qu'elle a été fixée pour les bulles du premier cluster (i.e. la fonction objectif ne prend donc en compte que les bulles des deux clusters prioritaires et le jeu de données d'entrée du simulateur ne comprend que les fréquences et puissances de ces bulles, les ressources fréquentielles et les puissances pour les bulles du premier cluster étant forcément égales à celles déterminées à l'issue de optimisation bayésienne relative au cluster de priorité priomax. A ce stade, la configuration optimale pour les bulles de ces deux clusters est établie. Et le processus se poursuit jusqu'à ce que tous les clusters aient été configurés : une optimisation bayésienne relative au cluster de priorité priomax-i juste inférieure à la priorité précédemment considérée priomax-i+1, est effectuée pour déterminer la configuration des seules bulles de ce cluster, en tenant compte aussi de la configuration radio telle qu'elle a été précédemment fixée pour les bulles des i cluster de plus grande priorité (i.e. la fonction objectif ne prend donc en compte que les bulles des i clusters prioritaires et le jeu de données d'entrée du simulateur ne comprend que les fréquences et puissances de ces bulles, les ressources fréquentielles et les puissances pour les bulles de ces i clusters étant forcément égales à celles déterminées à l'issue des optimisation bayésienne relative à ces clusters de priorité.

Un traitement séquentiel online obligerait à éteindre des bulles.

Dans un mode de réalisation, pour le traitement offline et/ou le traitement online, plutôt qu'un traitement d'optimisation bayésienne pour tous les clusters réalisé par le seul RC maître, l'optimisation bayésienne pour chaque cluster de bulles est réalisée par un RC dans chaque cluster, ce RC est un RC désigné maître parmi les RCs des bulles du cluster), une coordination entre clusters ayant alors lieu via leur RC Maître de cluster.

On notera que les étapes décrites comme mises en œuvre par le dispositif de configuration du RC maître dans le procédé de configuration globale 400 décrit ci-dessus (ou au moins une étape, par exemple l'étape 100) sont, dans un autre mode de réalisation, mises en œuvre par un tel dispositif de configuration globale mais cette fois, extérieur aux RC, par exemple au sein d'un serveur.

Les étapes du procédé de configuration décrit ci-dessus mises en œuvre par le RC maître peuvent être mis en œuvre par l'exécution, sur un processeur, d'instructions logicielles d'une application logicielle. Alternativement, il peut être mis en œuvre par un hardware dédié, typiquement un circuit intégré numérique, soit spécifique (ASIC) ou basé sur une logique programmable (par exemple FPGA/Field Programmable Gate Array) Il en est de même pour les étapes du procédé de configuration décrit ci-dessus mises en œuvre par un RC secondaire.

Les informations délivrées en sortie de la solution de configuration globale selon l'invention, définies donc en fonction de l'ensemble des bulles et en fonction des contraintes associées indiquées par les données d'entrée comportent la puissance radio et la ressource en fréquence (fréquence(s) ou sous-bande(s) fréquentielle(s)et/ou taille de bande fréquentielle) sélectivement affectées à chaque bulle pour assurer le meilleur service pour chaque bulle.

La solution de configuration globale décrite ci-dessus propose donc, pour attribuer sélectivement les meilleures ressources radio, aux bulles 10 :
- un processus comprenant un pré-traitement (dit « OFFLINE ») simulé, puis d'un affinement (dit « ONLINE) après que la configuration globale définie par le pré-traitement est déployée sur le terrain ;
- une solution entraînée en OFFLINE rapide (quelques minutes, par exemple en moins de 5 minutes), adaptable à tout déploiement, et ce, dans un mode de réalisation, quelle que soit la densité grâce au regroupement des bulles dans des clusters;
- un déclenchement d'un procédé ONLINE rapide (avec un seuil maximum d'itération fixé par exemple moins de 5 itérations, ou moins de 10 ...) sur commande ou en cas de dégradation des performances ;
- un déclenchement d'un procédé de reconfiguration globale OFFLINE sur la base de mesures terrain (en vue d'une calibration du modèle radio OFFLINE) ;
- un mécanisme de passage à l'échelle (avec clustering de bulles)

### CONTROLE DE CONFIGURATION EN CAS DE DETECTION DE BULLE INTERFERENTE

En référence à la figure 2, on considère dans un mode de réalisation, que, dans chaque RC 40, le dispositif de traitement maître 420, adapté pour être actif seulement quand le RC 40 a le statut Maître, comporte un bloc de pilotage de repli 420_2, adapté, donc, pour être actif seulement quand le RC 40 a le statut Maître.

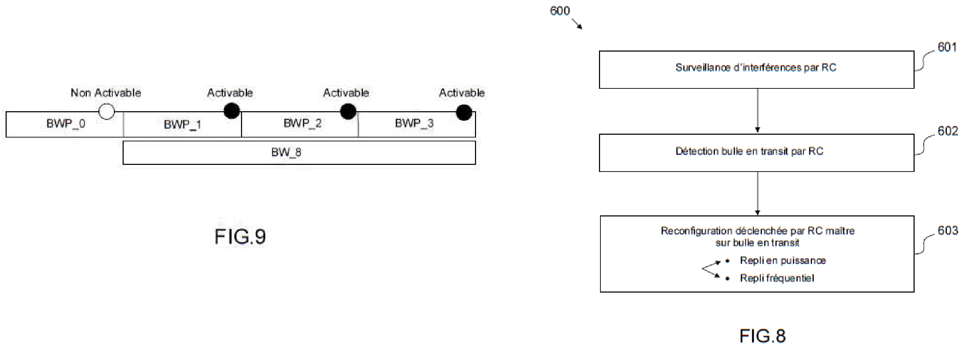

Un procédé de mise en œuvre d'une configuration de repli 600 est maintenant décrit en référence à la figure 8, permettant la reconfiguration radio sans coupure de service en cas de survenue de bulle interférente dans la fédération de bulles tactiques déployées sur la zone d'intervention (par exemple, une bulle embarquée dans un véhicule se déplaçant dont la trajectoire est non connue).

Dans chaque RC (Maître et secondaire), dans une étape 601, le dispositif de contrôle 421 évalue régulièrement les niveaux d'interférences dans sa bulle tactique, sur la base des mesures radio effectuées par les terminaux utilisateurs et collectées par la station de base et des mesures radio de la station de base : CQI, le nombre de retransmissions de paquets, MCS...

Par exemple, un classifieur par IA (ex- Support Vector Machine : SVM ou des réseaux neuronaux) est entraîné en utilisant l'ensemble de ces métriques, indicatRCes de la qualité radio ou de sa dégradation, et prédit une classe qui correspond à un niveau d'interférence. Le nombre de classes, chaque classe correspondant à un niveau d'interférence, peut être ajusté.

Dans un mode de réalisation, le dispositif de contrôle 421 détermine la nature de l'interférence en fonction de l'évolution 'au cours du 'temps des niveaux (classes) d'interférence : une bulle en approche correspond à une dégradation progressive, ou une nouvelle bulle statique déployée correspond à une dégradation continue et stagnante.

Lorsqu'il détecte en fonction des derniers niveaux d'interférence évalués qu'il y a une bulle tactique en transit qui génère ces interférences, il transmet une alerte au bloc de pilotage de repli 420_2 du RC maître, dans une étape 602 via leurs blocs E/R MANET 41.

Par exemple, on considère la situation suivante : les N bulles tactiques précédemment considérées sont déployées, en fonctionnement opérationnel et une N+1 bulle tactique, en transit, se déplace à proximité des N bulles tactiques (le fonctionnement serait similaire si cela était une des N bulles tactiques considérées qui se mettait à se déplacer). La N+1 ème bulle tactique a la même structure que les N précédemment décrites, notamment elle comporte un RC, qui dans le cas présent, est positionné en tant que RC secondaire (il est considéré qu'un RC de bulle en transit ne sera pas maître).

Le bloc de pilotage de repli 420_2 du RC maître, dès réception d'une alerte signalant qu'une des N bulles déployées est impactée par une bulle mobile en transit dans la zone d'intervention ou de plusieurs alertes de ce type, dans une étape 603, détermine et impose une configuration de repli à cette bulle mobile en fonction de l'impact subi par les bulles déployées, avec une réduction de puissance (donnant lieu à une puissance de repli) pour la bulle tactique en transit et/ou avec une ressource fréquentielle de repli (correspondant à une réduction de la ressource fréquentielle ou à un basculement vers une autre ressource fréquentielle) () ayant été affectée à la bulle en transit. Par exemple seule une sous-partie stricte de cette ressource fréquentielle non utilisée par les N bulles sera autorisée pour la N+1 ou alors une sous-partie stricte de cette ressource fréquentielle présentant un minimum d'interférence entre la N+1 ème bulle et les N bulles déployées.

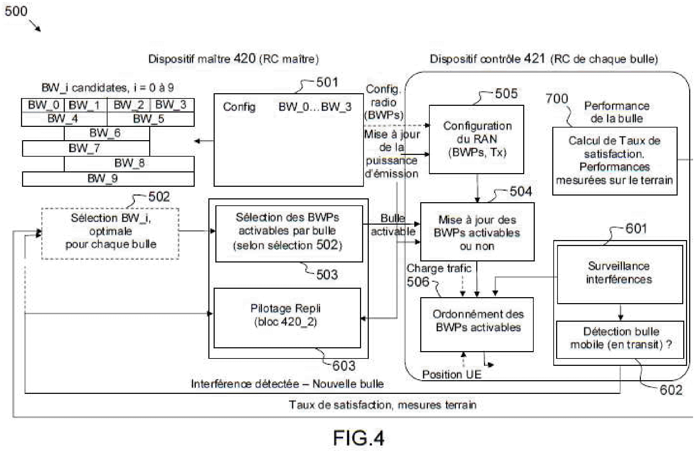

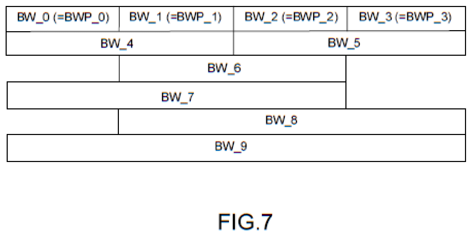

Il est maintenant décrit en référence aux figures 4 et 7 un mode de réalisation particulier de l'invention, dans lequel, à titre d'illustration le protocole mis en œuvre au sein de chacune de N bulles tactiques déployées est conforme au protocole 5G, les ressources fréquentielles étant à base d'une ou plusieurs parts de largeur de bande, dites BWPs (de l'anglais « BandWidth Parts »). Ce mode de réalisation permet d'allouer une de ces sous bandes candidates et de pouvoir basculer si besoin d'une sous bande à une autre pour limiter l'interférence y compris sur les canaux de contrôle et sans coupure de service.

Les BWPs sont utilisées en 5G principalement à des fins d'économie d'énergie. Chaque BWP est une sous-bande fréquentielle, constituée d'un ensemble de Physical Resource Blocks (PRBs) contigus associés à une certaine numérologie (terminologie 5G et caractérisant l'espace entre sous-porteuses). En cas de basculement de BWP, les canaux de données sont basculés et les canaux de contrôle sont également basculés et leur étalement spectral est strictement limité aux ressources fréquentielles attribuées à la bulle. Cette caractéristique est exploitée de façon avantageuse dans le mode de réalisation décrit ci-après, afin de limiter l'interférence inter bulle, sur les canaux de contrôle et sur les canaux de données, le repli s'effectuant sur ces deux types de canaux.

L'utilisation des BWPs est ici détournée de son utilisation initiale et principale (efficacité énergétique) à des fins de réduction/coordination d'interférence (y compris sur les canaux de contrôle).

Pour communiquer, dans le cadre du déploiement sur la zone d'intervention Z, chacune des N bulles doit se voir allouer une sous-bande candidate dans la bande totale. En pratique, la bande totale peut être subdivisée au plus en un certain nombre, M, de sections de bandes de taille égale.

En référence à la figure 4 représentant différentes étapes d'un procédé 500 mises en œuvre dans le mode de réalisation de l'invention considéré ici, le standard prévoyant la configuration de 4 BWPs maximum par liaison DL/UL (DownLink, UpLink), BWP_0, 1, 2 et 3 dans une étape 501 de mise en place de sous-bandes candidates, le dispositif maître 420 transmet à chaque dispositif de contrôle 421 du RC de chaque bulle la commande de configurer la station de base et les terminaux selon ces 4 BWPs, par exemple ici les 4 sous-bandes BW_0, 1, 2 et 3 représentés en figure 7 (i.e. ces 4 BWPs seront utilisables a priori, leur usage étant cependant limité le cas échéant par le RC de la bulle par la mise en place d'un état activable/non activable pour chacun de ces BWP comme détaillé ci-après).

Etant donné ces 4 BWPs unitaires considérés, on choisit ici M=4.

Il est donc défini 10 ressources fréquentielles candidates distinctes à considérer pour chaque bulle tactique BW_0, BW1, ..., BW_9, i.e. soit une des M sous-bandes unitaires, une concaténation de certaines sous-bandes contiguës parmi ces M sous-bandes unitaires : cf. figure 7.

Celle des ressources fréquentielles considérée comme optimale pour chacune des N bulles est déterminée par le dispositif maître 420, dans une étape 502, par exemple à l'aide du procédé 400 décrit plus haut, ou d'une autre technique.

A l'issue de l'étape 502, dans une étape 503, le dispositif maître 420, sélectionne celui ou ceux des BWPs activables (plus généralement des sous-bandes unitaires activables BW) pour chaque bulle tactique, BWP_m, m = 0 à 3, en fonction de celle des 10 ressources fréquentielles sélectionnée pour la bulle à l'étape 502 : la ressource fréquentielle BW_i attribuée à la bulle est composée des BWPs activables par bulle qui s'étalent spectralement sur la ressource fréquentielle attribuée.

La BW_i= 0 à 9 finalement sélectionnée par l'étape 502 ou désignée comme bande de repli (en cas de nouvelle interférence détectée) par l'étape 603, donne lieu dans les dispositifs de contrôle RC 421 à la mise à jour des BWPs 'activables' par station radio, dans une étape 504.

Par exemple, en référence à la figure 9, si la BW_8 a été sélectionnée comme optimale pour une des bulles tactiques, les BWP_1, BWP_2 et BWP_3 qui la composent sont déclarées 'activables' pour cette bulle.

Dans une étape 506, un ordonnancement est effectué par le dispositif de contrôle 421 dans chaque RC en fonction des BWPs déclarés activables dans la bulle du RC, suite à la dernière mise à jour 504. Cet ordonnancement de BWPs désigne le BWP actif par terminal utilisateur de la bulle, parmi les BWP activables déclarés pour la bulle. Le traitement d'ordonnancement de BWPs 506 est donc différent du scheduler qui lui opère au niveau MAC et qui est un mécanisme d'allocation de ressources aux UEs dans les réseaux sans-fil déjà implémenté 3GPP (ce scheduler choisit quel PRB attribuer à chaque terminal utilisateur sélectivement dans le BWP actif pour le terminal, par exemple en fonction des autres terminaux utilisateurs ayant le même BWP actif). On rappelle que l'invention n'impose aucune modification du scheduler au niveau MAC déjà implémenté et est donc compatible avec n'importe lequel d'entre eux.

De plus, il est à noter qu'un seul BWP peut être actif à un instant donné par terminal utilisateur (comme spécifié par le standard 5G). Ici, le BWP actif par terminal sera sélectionné uniquement parmi les BWPs unitaires dits activables (cercles remplis dans l'exemple représenté en figure 9) et non parmi tous les BWPs unitaires configurés initialement (BW_i, i= 0 à 3 à l'étape 505). Le but est d'améliorer la qualité de service radio de chaque terminal utilisateur, évaluée par exemple par un critère de débit par terminal utilisateur à respecter. Pour cela il faut éviter de congestionner une BWP et chercher à répartir les terminaux de la bulle sur les différents BWPs activables en prenant en compte la charge par BWP et le niveau d'interférence par BWP et donc le C/I (Carrier to Interference Ratio) ou SINR. La sélection prend en compte, quand cela est disponible la charge du trafic par BWP activable (ou le nombre de terminaux actifs par BWP activable), le niveau d'interférence dans la bulle (optionnellement par niveau d'interférence BWPs activables) et la position des terminaux utilisateurs de la bulle.

Différentes stratégies d'ordonnancement peuvent être appliquées comme le round robin, qui répartit les utilisateurs de façon équitable sur les BWPs, ou toute heuristique prenant en compte la charge sur la bande, et/ou le niveau d'interférence (optionnellement par BWP) et optionnellement, la position des UEs.

Dans un mode de réalisation, la surveillance d'interférence 601 par le dispositif de contrôle 421 dans chaque RC comprend l'évaluation en continu du niveau d'interférences. Par exemple, l'interférence est classée selon l'impact qu'elle occasionne sur les performances radio de la bulle. Optionnellement, cette opération de classification peut être réalisée par sous bande fréquentielle, ici, par BWP unitaire utilisé dans la bulle. La nature de la bulle interférente peut aussi être détectée parmi « bulle statique » et « bulle en mouvement » dans l'étape 602.

Dans un mode de réalisation, en cas de nouvelle interférence détectée (non prise en compte par la sélection 502), une stratégie de repli immédiate 603 est décidée par le RC Maître, par action sur les ressources radio : Puissance et BWPs.

Une nouvelle bulle détectée (nouvelle bulle statique déployée sur la zone d'intervention ou bulle mobile en transit) déclenche une nouvelle optimisation radio 502 ou une stratégie de repli (pilotage 603) mise en œuvre par le dispositif maître 420.

Dans un mode de réalisation, en référence aux figures 4 et 8, si au moins une bulle déployée est impactée par une bulle interférente détectée comme bulle mobile en transit dans la zone d'intervention des N bulles tactiques statiques, le dispositif de contrôle 421 de la bulle impactée transmet au dispositif Maître 420 le niveau (exemple : classe) d'interférence subie, optionnellement par sous-bande (BWP_0, 1, 2, 3) à l'issue des étapes 601-602. Une stratégie de repli est imposée par le dispositif Maître 420 à cette bulle mobile selon l'impact subi par la / les N bulles déployées. Le dispositif Maître 420 décide alors lors de l'étape 603 des ressources radio à appliquer sur la bulle mobile (en connaissance des ressources actuellement utilisées dans la fédération des N bulles déployées, i.e. les BWPs activables), selon la stratégie suivante :
- le bloc de pilotage de repli 420_2 du RC maître calcule, la valeur de puissance de repli pour la bulle en transit, (puissance réduite par rapport à son actuelle puissance), en fonction de la classe d'interférence transmise par chaque bulle impactée ;
- si la puissance de repli calculée pour la bulle mobile en transit est supérieure à un seuil minimal prédéfini (typiquement tel qu'en dessous de ce seuil, ses propres communications seraient perdues) : réduction de puissance de la bulle mobile en transit en fonction de la classe d'interférence ; la valeur de puissance réduite calculée est transmise par le bloc de pilotage de repli 420_2 du RC maître au dispositif de contrôle 421 du RC de la bulle en transit, pour configuration de la bulle selon cette puissance réduite via une étape 505 ;
- si la puissance de repli calculée pour la bulle mobile en transit est inférieure au seuil minimal et qu'il existe au moins 1 BWP libre (i.e. déclaré « non activable ») commun à toutes les bulles impactées (i.e. ayant transmis une alerte relative à la bulle interférente au dispositif maître 420, le repli de la bulle mobile sur ce(s) BWP(s), nommé BWP_repli(s), est déclenché par le bloc de pilotage de repli 420_2 du RC maître ;
- si la puissance de repli calculée pour la bulle mobile en transit est inférieure au seuil minimal et qu'il n'existe aucun BWP libre, la sélection de la BWP de repli: *BWP_repli* parmi M BWPs est déterminée par la formule *BWP_repli* = *argmaxₘ* {Σ_{*i=*1}*_{,N} w*_{*i*,*m*}} où i désigne la bulle interférée, *w*_{*i*,*m*} est un poids affecté au BWP candidat m (parmi les M) pour la bulle i (parmi les N). *w*_{*i*,*m*} est élevé si BWP_m est libre pour la bulle i, et faible si interférence subie élevée sur le BWP_m (dans des modes de réalisation autres qu'avec BWP, une sous-bande unitaire est considérée à la place d'un BWP).
En cas d'impact trop significatif de la bulle mobile sur les bulles déployées (i.e. dépassant un seuil limite d'interférence), la puissance de la bulle mobile est réduite en dessous du seuil minimal évoqué.

En phase d'optimisation 502 du réseau radio déployé et également pendant le fonctionnement opérationnel des N bulles déployées, dans une étape 700, un taux de satisfaction des performances (à base de métrique QoS, par exemple, définie par 3GPP) est mesuré par bulle, est complété le cas échéant de mesures radio terrain et est transmis au dispositif Maître 420. En fonction de ces performances (calcul de la fonction objectif par exemple), un ajustement des ressources radio est appliqué par le dispositif maître 420.

L'utilisation des BWPs présente les avantages suivants : i) un repli immédiat effectif en moins d'une seconde, et ii) la possibilité de se replier sans avoir à éteindre les stations, assurant ainsi un service continu. Le contrôle des états activables/non activables et l'ordonnancement des BWPs contribue à réaliser une adaptation dynamique de configuration radio, sans coupure de connexion, lors de la survenue d'une bulle interférente.

Les modes de réalisation de l'invention décrits ci-dessus s'appuient donc sur un protocole d'échange pour la signalisation entre les RCs Secondaire et le RC Maître permettant à celui-ci de prendre les décisions adaptées à la situation, tant en situation de déploiement statique qu'en situation de survenue de nouvelle bulle dans la couverture des N bulles statiques déployées : choix de BW/BWP, repli fréquentiel, basculement de BWP, réduction de puissance. Les interactions ont été décrites ci-dessus et comprennent notamment la transmission (via les liens MANET ici) des données suivantes :

Du dispositif de contrôle 421 de chaque RC vers le dispositif Maître 420 du RC Maître :
- taux de satisfaction (QoS) calculé par bulle à partir de mesures radio sur le terrain (réalisées de façon native selon le standard 3GPP) pour décision par le RC Maître de l'ajustement éventuel de la meilleure configuration radio à appliquer ;
- indication de position de la bulle (optionnel) ;
- ID de la bulle ;
- classe d'interférence, éventuellement par BWP et caractérisation de l'interférence : interférence bulle fixe ou en mobilité ;
- mesures radio 'terrain' telles que statistiques RSRP (Reference signal Receive Power), TA (Timing Advance), peuvent également être transmises en vue de re-calibrer le modèle de propagation dans la simulation Offline.

Du dispositif Maître 420 du RC Maître vers le dispositif de contrôle 421 de chaque RC :
- configuration radio active à appliquer : choix des sous bandes, puissance, réduction de puissance si bulle mobile, BWP à activer/désactiver.

Les étapes du procédé de contrôle de configuration décrit ci-dessus mises en œuvre par le RC maître peuvent être mis en œuvre par l'exécution, sur un processeur, d'instructions logicielles d'une application logicielle. Alternativement, il peut être mis en œuvre par un hardware dédié, typiquement un circuit intégré numérique, soit spécifique (ASIC) ou basé sur une logique programmable (par exemple FPGA/Field Programmable Gate Array). Il en est de même pour les étapes du procédé de contrôle de configuration décrit ci-dessus mises en œuvre par un RC secondaire.

On notera que les aspects décrits respectivement dans la section « Configuration globale » et dans la section « Contrôle de configuration » peuvent, dans un mode de réalisation, être mis en œuvre indépendamment l'un de l'autre. Dans des modes de réalisation, une fédération de bulles 10 implémente l'un quelconque de ces aspects et pas l'autre.

On notera que la synchronisation inter-bulles n'est pas nécessaire pour la mise en œuvre de l'invention.

## Revendications

1. Procédé de configuration radio d'un ensemble de N bulles tactiques (10) dans le cadre de leur déploiement sur une zone d'intervention (Z),
chaque bulle tactique (10) comportant un ensemble de terminaux radio (30) et une station de base radio (20) associée à un contrôleur radio (40), la station de base étant adaptée pour mettre en œuvre avec chaque terminal radio (30) de la bulle, des radiocommunications,
selon lequel, dans une première phase, ledit procédé comprend les étapes suivantes mises en œuvre par un bloc électronique de configuration globale (42) :
- générer, en fonction de la position relative des bulles et la nature du terrain sur la zone d'intervention, un simulateur radio paramétrable en fonction d'un jeu de données d'entrée,
ledit jeu de données d'entrée spécifiant pour chaque bulle tactique n°i (10), i = 1 à N, une ressource fréquentielle respective RFi et une puissance d'émission radio Pi,
ledit simulateur simulant la mise en œuvre de trafic radio dans les bulles tactiques sur la base d'un modèle de propagation défini en fonction de ladite nature de terrain, le trafic radio étant simulé dans chaque bulle tactique en fonction de la ressource fréquentielle et de la puissance d'émission radio spécifiées pour ladite bulle tactique dans le jeu de données d'entrée,
- puis dans une première étape d'exploration, mettre en œuvre le premier processus suivant :
choisir un nouveau jeu de données d'entrée du simulateur radio, dans lequel pour chaque bulle tactique (10) une ressource fréquentielle respective RFi, et une puissance d'émission radio Pi sont choisies parmi un ensemble de ressources fréquentielles candidates respective et un ensemble de puissances d'émission radio candidates ;
calculer, en fonction du trafic radio simulé par le simulateur radio paramétré avec le nouveau jeu de données d'entrée, la valeur d'au moins un indicateur de performance radio évaluant la qualité radio du trafic radio sur les bulles pour le nouveau jeu de données d'entrée,
et l'itérer jusqu'à identifier un jeu de données d'entrée dit optimal telles que la valeur d'au moins l'indicateur de performance radio pour ledit jeu de données d'entrée remplisse un critère prédéfini indiquant une performance radio considérée optimale ;
une fois les bulles tactiques déployées (10) dans lesdites positions relatives sur la zone d'intervention (Z) et configurées avec la ressource fréquentielle et la puissance respectives spécifiées pour chacune d'elle dans le jeu de données d'entrée identifié comme remplissant le critère prédéfini, les étapes suivantes sont mises en œuvre dans une deuxième phase par le bloc électronique de configuration globale :
collecte de valeurs d'indicateurs de la qualité radio dans les bulles déployées (10) sur la zone d'intervention (Z), lesdites valeurs d'indicateurs ayant été déterminées en fonction de mesures radio effectuées sur le trafic radio dans les bulles ;
calcul d'un niveau de performance en fonction desdites valeurs collectées et comparaison dudit niveau avec un premier seuil de performance prédéfini ;
si le niveau de performance calculé est supérieur au premier seuil de performance prédéfini, la configuration des bulles tactique est maintenue ;
si le niveau de performance calculé est inférieur au premier seuil de performance prédéfini, dans une deuxième étape d'exploration, mettre en œuvre le deuxième processus suivant :
choisir un nouvel 2N-uplet RF1, P1, ..., RFN, PN pour les bulles tactiques dans lequel pour chaque bulle tactique une ressource fréquentielle respective RFi, et une puissance d'émission radio Pi respective sont choisies parmi un ensemble de ressources fréquentielles candidates et un ensemble de puissances d'émission radio candidates, déclencher, auprès des contrôleurs radio des bulles tactiques, la reconfiguration des bulles tactiques sur la zone d'intervention selon ledit nouvel 2N-uplet, puis collecter des valeurs d'indicateurs de la qualité radio dans les bulles tactiques ainsi reconfigurées, déterminés en fonction de mesures radio effectuées sur le trafic radio dans les bulles et calculer un niveau de performance en fonction desdites valeurs collectées ;
et l'itérer jusqu'à ce qu'à la survenue du premier événement parmi un temps limite prédéfini ou une nombre d'itérations maximum prédéfini soit atteint ou jusqu'à identifier un nouvel 2N-uplet dit optimal, pour lequel le niveau de performance calculé est supérieur au premier seuil de performance prédéfini, et alors maintenir la configuration des bulles tactiques (10).

2. Procédé de configuration radio d'un ensemble de N bulles tactiques (10) selon la revendication 1, selon lequel dans la deuxième phase, si le niveau de performance calculé est inférieur au premier seuil de performance prédéfini, ladite deuxième étape d'exploration n'est mise en œuvre que si le niveau de performance calculé est supérieur à un deuxième seuil de performance prédéfini ; et quand le niveau de performance calculé est inférieur au deuxième seuil de performance prédéfini, une étape de recalibrage du simulateur radio paramétrable est effectuée comprenant l'ajustement du modèle de propagation en fonction de mesures radio effectuées sur le trafic radio dans les bulles (10) dans la deuxième phase.

3. Procédé de configuration radio d'un ensemble de N bulles tactiques (10) selon la revendication 1 ou 2, comprenant une étape de partitionnement des bulles en clusters telle que les bulles tactiques (10) présentant le plus d'interférences entre elles étant regroupées au sein d'un même cluster, lesdites interférences étant estimées en fonction des distances entre les bulles et du modèle de propagation et
selon lequel l'une au moins des première et deuxième étapes d'exploration est mise en œuvre cluster par cluster.

4. Procédé de configuration radio d'un ensemble de N bulles tactiques (10) selon la revendication 3, selon lequel :
- lorsque la première étape d'exploration est mise en œuvre cluster par cluster, elle est mise en œuvre séquentiellement sur chaque cluster ; et/ou
- lorsque la deuxième étape d'exploration est mise en œuvre cluster par cluster, elle est mise en œuvre parallèlement sur chaque cluster.

5. Procédé de configuration radio d'un ensemble de N bulles tactiques (10) selon la revendication 4, selon lequel : lorsque la première étape d'exploration est mise en œuvre cluster par cluster, elle est mise en œuvre séquentiellement sur chaque cluster en ordonnant les clusters entre eux en fonction des interférences entre cluster.

6. Procédé de configuration radio d'un ensemble de N bulles tactiques (10) selon l'une quelconque des revendications précédentes, selon lequel dans l'une au moins des première et deuxième étapes d'exploration, une optimisation Bayésienne est mise en œuvre pour choisir lesdites ressources fréquentielles et puissances d'émission radio.

7. Procédé de configuration radio d'un ensemble de N bulles tactiques (10) selon l'une quelconque des revendications précédentes, selon lequel un mécanisme est mis en œuvre entre les contrôleurs radio (40) des N bulles tactiques (10) reliés par des liaisons de radiocommunications pour sélectionner entre eux un contrôleur radio maître, les autres étant des contrôleurs radio secondaires,
chaque contrôleur radio (40) comportant un bloc électronique de configuration globale (420), ledit un bloc électronique de configuration globale (420) d'un contrôleur radio n'étant actif que lorsque le contrôleur radio a été sélectionné comme contrôleur radio maître.

8. Procédé de configuration radio d'un ensemble de N bulles tactiques (10) selon la revendication 7, selon lequel dans la deuxième phase, lesdites valeurs d'indicateurs de la qualité radio dans les bulles collectées par le bloc électronique de configuration globale (420) du contrôleur radio maître lui sont fournies par les contrôleurs radios des N bulles tactiques.

9. Programme d'ordinateur, destiné à être stocké dans la mémoire d'un bloc électronique de configuration globale (420) et comprenant en outre un microcalculateur, ledit programme d'ordinateur comprenant des instructions qui, lorsqu'elles sont exécutées sur le microcalculateur, mettent en œuvre les étapes d'un procédé selon l'une des revendications précédentes.

10. Bloc électronique de configuration globale (420) d'un ensemble de N bulles tactiques (10) dans le cadre de leur déploiement sur une zone d'intervention (Z),
chaque bulle tactique (10) comportant un ensemble de terminaux radio (30) et une station de base radio (20) associée à un contrôleur radio (40), la station de base (20) étant adaptée pour mettre en œuvre avec chaque terminal radio (30) de la bulle, des radiocommunications,
ledit bloc électronique de configuration globale (420) étant adapté pour, dans une première phase, générer, en fonction de la position relative des bulles (10) et la nature du terrain sur la zone d'intervention (Z), un simulateur radio paramétrable en fonction d'un jeu de données d'entrée,
ledit jeu de données d'entrée spécifiant pour chaque bulle tactique n°i (10), i = 1 à N, une ressource fréquentielle respective RFi et une puissance d'émission radio Pi,
ledit simulateur simulant la mise en œuvre de trafic radio dans les bulles tactiques sur la base d'un modèle de propagation défini en fonction de ladite nature de terrain, le trafic radio étant simulé dans chaque bulle tactique en fonction de la ressource fréquentielle et de la puissance d'émission radio spécifiées pour ladite bulle tactique dans le jeu de données d'entrée,
ledit bloc électronique de configuration globale (420) étant adapté pour, dans une première étape d'exploration, mettre en œuvre le premier processus suivant :
choisir un nouveau jeu de données d'entrée du simulateur radio, dans lequel pour chaque bulle tactique une ressource fréquentielle respective RFi, et une puissance d'émission radio Pi sont choisies parmi un ensemble de ressources fréquentielles candidates respective et un ensemble de puissances d'émission radio candidates ;
calculer, en fonction du trafic radio simulé par le simulateur radio paramétré avec le nouveau jeu de données d'entrée, la valeur d'au moins un indicateur de performance radio évaluant la qualité radio du trafic radio sur les bulles pour le nouveau jeu de données d'entrée,
et l'itérer jusqu'à identifier un jeu de données d'entrée dit optimal telles que la valeur d'au moins l'indicateur de performance radio pour ledit jeu de données d'entrée remplisse un critère prédéfini indiquant une performance radio considérée optimale ;
ledit bloc électronique de configuration globale (420) étant adapté pour, une fois les bulles tactiques (10) déployées dans lesdites positions relatives sur la zone d'intervention (Z) et configurées avec la ressource fréquentielle et la puissance respectives spécifiées pour chacune d'elle dans le jeu de données d'entrée identifié comme remplissant le critère prédéfini, dans une deuxième phase, collecter des valeurs d'indicateurs de la qualité radio dans les bulles déployées sur la zone d'intervention, lesdites valeurs d'indicateurs ayant été déterminées en fonction de mesures radio effectuées sur le trafic radio dans les bulles, puis calculer un niveau de performance en fonction desdites valeurs collectées et effectuer une comparaison dudit niveau avec un premier seuil de performance prédéfini ; si le niveau de performance calculé est supérieur au premier seuil de performance prédéfini, la configuration des bulles tactique est maintenue et si le niveau de performance calculé est inférieur au premier seuil de performance prédéfini, dans une deuxième étape d'exploration, ledit bloc électronique de configuration globale est adapté pour alors mettre en œuvre le deuxième processus suivant :
choisir un nouvel 2N-uplet RF1, P1, ..., RFN, PN pour les bulles tactiques dans lequel pour chaque bulle tactique une ressource fréquentielle respective RFi, et une puissance d'émission radio Pi respective sont choisies parmi un ensemble de ressources fréquentielles candidates et un ensemble de puissances d'émission radio candidates, déclencher auprès des contrôleurs radio des bulles tactiques, la reconfiguration des bulles tactiques sur la zone d'intervention selon ledit nouvel 2N-uplet, puis collecter des valeurs d'indicateurs de la qualité radio dans les bulles tactiques ainsi reconfigurées, déterminés en fonction de mesures radio effectuées sur le trafic radio dans les bulles et calcul d'un niveau de performance en fonction desdites valeurs collectées
et pour l'itérer jusqu'à ce qu'à la survenue du premier événement parmi un temps limite prédéfini ou une nombre d'itérations maximum prédéfini soit atteint ou jusqu'à identifier un nouvel 2N-uplet dit optimal, pour lequel le niveau de performance calculé est supérieur au premier seuil de performance prédéfini, et alors maintenir la configuration des bulles tactiques (10).
